# EUROPEAN PATENT APPLICATION

(11) **EP 4 506 562 A1**
(43) Date of publication of application: **12.02.2025**
(21) Application number: 23382835.9
(22) Date of filing: 09.08.2023
(51) Int. Cl.: F03D 17/00

(54) **WIND TURBINE AND METHOD OF OPERATING A WIND TURBINE**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

Wind turbine (1) with at least one rotor blade (2) and a hub (3) comprising one blade bearing (4) for each rotor blade (2), wherein each rotor blade (2) comprises a blade root (5) having a front surface (6), wherein the rotor blade (2) is fixed with the blade root (5) to the respective blade bearing (4) with its front surface (6) contacting a bearing surface (7) by means of fixating means (8) forming a bearing-blade-connection (9), wherein at each bearing-blade-connection (9) at least one detection device (10) is provided, wherein the at least one detection device (10) is connected to the rotor blade (2) and the blade bearing (4) and is configured to detect a gap (G) between the front surface (6) and the bearing surface (7).

## Description

The present invention relates to a wind turbine with at least one rotor blade and a hub comprising one blade bearing for each rotor blade, wherein each rotor blade comprises a blade root having a front surface, wherein the rotor blade is fixed with the blade root to the respective blade bearing with its front surface contacting a bearing surface by means of fixating means forming a bearing-blade-connection. The present invention further relates to a method of operating a wind turbine.

It is noted that the term "front surface" of the blade root respectively the rotor blade used in the following description is commonly referred to as the "blade root face" of the blade root respectively the rotor blade.

Due to different reasons, for example design, manufacturing and/or operational conditions, wind turbine blades in operation can develop blade root damage. When damage builds up, the stiffness and strength of the blade root materials and components start to deteriorate over time and operational loads. Thus, the blade root is a critical component and, when damaged, the blade may detach from the turbine causing a structural failure with high risk of turbine damage. The blade root needs to be monitored throughout the service life of the wind turbine to prevent the blade root damage from reaching a critical level. For detecting damage of a wind turbine blade, the state of the art describes many different approaches:
In general, rotor blade damage is evaluated based on visual inspections, which is a method which is not capable to define the extent of damage. However, for conducting blade root inspections, the turbine needs to be stopped, resulting in a turbine downtime and a loss of energy production. As an alternative, sensors can be used to monitor rotor blade damage.

US 9194843 B2 describes how damage can be monitored in the whole rotor blade by means of acoustic signals. An acoustic sensor is positioned on the blade root to receive airborne acoustic signals emanating from anomalies in rotating blades during cyclic loading.

US 2021115904 A1 describes another way to use contactless sensors. A displacement of a blade root and a hub is measured by means of contactless sensors, like laser sensors, to control the loads at the blade root and adjust pitch angles.

However, contactless, in particular optical, measurement has the disadvantage that a contamination of the measuring environment, for example caused by water, grease or oil leakage, is likely to distort the measurement results. Thus, it is the object of the present invention to provide a way to improve the monitoring of blade root damage of rotor blades of a wind turbine.

This object is achieved by providing a wind turbine of the type mentioned above which is characterized in that at each bearing-blade-connection at least one detection device is provided, wherein the at least one detection device is connected to the rotor blade and the blade bearing and is configured to detect a gap between the front surface and the bearing surface.

The term "connected" refers to any type of fixed or touching, connection. Hence, the detection device can be fixed to one of the two components, preferably the rotor blade, by means of a firm connection, like a screw connection or an adhesive connection. It can additionally touch the other of the two components to enable measurement of the size of the gap.

With the at least one detection device the size of the gap between the front surface of the blade root of the rotor blade and the bearing surface can be monitored. In an ideal bearing-blade-connection the front surface and the bearing surface abut against one another in a flat manner. As blade root damage evolves a gap appears between both surfaces and the size of the gap between both surfaces will increase. Depending on the degree of blade root damage the front surface and the bearing surface may not abut each other in a flat manner or may not abut each other at all, which can result in loosening of the fixating means and/or a loose bearing-blade-connection. Hence, by monitoring the gap size the blade root damage, in particular the degree of blade root damage, can be monitored, preferably during operation of the wind turbine.

Bolts may be used as fixating means. They can be fixed to the blade root by means of inserts embedded or bonded to the laminate structure of the rotor blade or by means of a T-bolt connection.

Referring to the, in particular perpendicular, distance between the front surface and the bearing surface a critical gap size can be correlated to a maximum acceptable degree of blade root damage and can be used as a threshold value. The at least one detection device can be used to detect the gap size reaching and/or exceeding the threshold value, in which case the operation of the wind turbine may be stopped to minimize the risk of wind turbine damage.

Since it results in an increasing gap size, a detachment of the bearing surface relative to the rotor blade or vice versa can be detected by means of the at least one detection device. Hence, the at least one detection device is preferably configured to detect the linear distance between the respective front surface and the respective bearing surface. The linear distance is preferably perpendicular to the front surface as well as the bearing surface in order to avoid an incorrect detection of an inclined distance between both surfaces which may be larger than the actual distance, respectively the gap size.

In a preferred embodiment, the at least one detection device is a measuring device configured to measure the gap size, in particular the linear distance, between the front surface and the bearing surface. By using a measuring device as detection device, the gap size can be measured respectively monitored over time. This way, it can not only be detected when the gap size reaches and/or exceeds the threshold value, but evolving of blade root damage can be monitored by monitoring the increase of the gap size over time. Hence, predictions of future blade root damage may be made based on measuring data collected over the time by means of the at least one measuring device. In an especially preferred embodiment, the at least one measuring device is a linear displacement sensor, in particular a linear variable displacement transducer.

The at least one measuring device can either be fixed to the rotor blade, wherein it is contacting the bearing surface, or to the blade bearing, wherein it is contacting the front surface. Hence, the measuring results collected by the at least one measuring device are less prone to errors caused by contaminations of the measuring environment, in particular oil or grease.

The at least one measuring device may be configured to measure the gap size continuously or periodically. Measuring either continuously or periodically can improve the safety of the wind turbine since the evolving of blade root damage can be monitored more precisely. The term "periodically" may be understood in such a way, that the gap size, in particular the linear distance between the front surface and the bearing surface, is measured for example once every 10 minutes, once every 5 minutes, once every minute or even several times a minute.

It is preferred, that the at least one detection device is permanently installed at the wind turbine, more specifically the bearing-blade-connection between each rotor blade and each respective blade bearing. This allows for detecting or measuring the current gap size while the wind turbine is operating. However, if the data collected by means of the at least one detection device cannot be processed respectively evaluated by means of the wind turbine, for example by a controller of the wind turbine, it can be advantageous to detect or measure the gap size during downtime of the wind turbine. To do so, the at least one detection device may be attached to the wind turbine, more precisely the respective bearing-blade-connection, before inspecting the gap size. After the inspection, the at least one detection device may again be detached from the wind turbine to avoid unnecessary components which might have a negative impact on the operation of the wind turbine.

The at least one measuring device may be a gauge, in particular a digital gauge. As mentioned above, the gauge can be attached to the wind turbine before inspection of the blade root damage, in particular the gap size, and it can be detached from the wind turbine after the inspection is complete. In case of a temporary attachment, the at least one measuring device may advantageously be easy to attach to and detach from the wind turbine without damaging any component of its components. In a favorable embodiment, no special tools are needed for attachment and detachment of the at least one detection device. In other words, the at least one detection device may be easily connectable to and removable from the rotor blade and the blade bearing without damaging the rotor blade or the blade bearing or any other component of the wind turbine. Temporarily providing at least one detection or measuring device improves inspection of blade root damage of rotor blades of wind turbines which are already in use and are not configured to either retrofit permanently attached detection or measuring devices or to process detection results or measuring data collected by means of those devices.

In an embodiment, the at least one detection device is connected to either an inside surface or an outside surface of the rotor blade. This may be the case regardless of the at least one detection device being permanently or temporarily connected to the wind turbine. Due to a connection of the at least one detection device to the outside surface of the rotor blade, attachment and detachment can be simplified since the outside surface is easily accessible. On the other hand, due to a connection of the at least one detection device to the inside surface of the rotor blade, the at least one detection device can be provided more secure and protected from environmental influences, like rain or wind, without the need of an additional cover. Of course, the surface of the rotor blade which the at least one detection device is connected to is one in the area of the blade root. In alternative embodiment, at least one detection device is connected to the inside surface and at least one other detection device is connected to the outside surface of the rotor blade.

The at least one detection device may be directly connected to the surface of the rotor blade by means of at least one bolt fixed to the rotor blade, in particular inserts of the rotor blade. Alternatively, the at least one detection device may be connected to the surface of the rotor blade by means of a support device which is fixed to the rotor blade, wherein one support device is provided for each detection device. Of course, any suitable way of connecting a device to a laminated component may be used to connect the at least one detection device to the rotor blade.

The bearing surface is preferably provided by a stiffener plate arranged at an inner race of the blade bearing or by the inner race of the blade bearing. The bearing surface can be understood as a reference surface which the at least one detection device is in contact with. When the blade surface is displaced relative to the bearing surface, the at least one detection device can detect the evolving gap and hence the evolving blade root damage. The inner race of the bearing may also be referred to as the inner ring of the bearing.

In case of the at least one detection device being connected to an outside surface of the rotor blade, the bearing surface may be provided either by the inner race of the bearing or the stiffener plate. However, in case of the at least one detection device being connected to an inside surface of the rotor blade, the bearing surface may preferably be provided by the stiffener plate.

Depending on the type and size of the wind turbine, the number of detection devices provided at each bearing-blade-connection can vary. In an embodiment, two or more detection devices are equally distributed along the circumference of the blade root. This is advantageous, because by using more than just one detection device at each blade root, the accuracy of the inspection of the gap size, hence the blade root damage, can be improved. Preferably, the number of detection devices is even, wherein respective to detection devices are arranged at opposite positions. The respective two detection devices can also be understood as a pair of detection devices.

It is preferred that the detection devices of each bearing-blade-connection are provided at positions along the circumference of the respective blade root at which the biggest local blade root damage is expected to develop. In other words, the detection devices are preferably provided at those positions of the blade root which are predicted to develop the highest local blade root damage. Hence, the gap size does not have to be monitored at the remaining positions along the circumference of the blade root. Therefore, only the most critical positions regarding blade root damage can be monitored, wherein the remaining positions can be predicted to develop no or less blade root damage.

To provide detection devices at those critical positions, respective two detection devices can be arranged on opposite positions along the circumference of the blade root and:
- at an angle of 30° to 60°, preferably 45°, with respect to the court line of the respective rotor blade.
- parallel or at least substantially parallel to the court line of the respective rotor blade.
- perpendicular or at least substantially perpendicular to the cord line of the rotor blade. (Hence, one of the two detection devices is positioned at the pressure side and the other of the two detection devices is positioned at the suction side of the rotor blade.)

The cord line which is referred to above can be understood as a line connecting the leading edge and the trailing edge of the rotor blade.

In an especially preferred embodiment, the wind turbine comprises a controller configured to control the operation of the wind turbine depending on a detection result of the at least one detection device. The controller can be a controller which is already provided at the wind turbine and which is additionally configured to process the data of the at least one detection device and to use that data for controlling the operation of the wind turbine. Hence, no additional controller needs to be provided and money and space can be saved. Alternatively, the controller may be an additional controller. In general, any type of controller suitable for processing detection results and/or measuring data and controlling the wind turbine may be used.

The controller may can be configured to stop the operation of the wind turbine as soon as the detection result, in particular the gap size detected by at least one detection device (or the measuring result, in particular the gap size measured by at least one measuring device), reaches and/or exceeds the threshold value. This way, wind turbine damage caused by blade root damage exceeding an acceptable level, hence reaching and/or exceeding the threshold value, can be prevented. The threshold value can be precalculated, for example based on finite element analysis. Preferably, the threshold value is 3.0 mm.

The operation of the wind turbine may, however, not be stopped, when the detection result of the at least one detection device reaches and/or exceeds the threshold value once or twice during a time period, for example ten minutes. The operation may only be stopped when the detection result of the at least one detection device reaches and/or exceeds the threshold value continuously during the time period. This way, anomalies of the detection result can be dealt with more easily.

The controller may be configured to send information to an off-site controlling system of the wind turbine or to provide a notification in a controlling software of the wind turbine when the threshold value is reached and/or exceeded.

It is noted, that the wind turbine preferably comprises three rotor blades and a hub with three blade bearings, wherein each rotor blade is fixed to one respective blade bearing forming a bearing-blade-connection. The number of rotor blades and blade bearings can, however, vary depending on the type of wind turbine. Hence, the number of detection devices provided at each bearing-blade-connection can vary too.

According to a further embodiment of the invention, a method for operating a wind turbine with at least one rotor blade and a hub comprising one blade bearing for each rotor blade, wherein each rotor blade comprises a blade root having a front surface, wherein the rotor blade is fixed with the blade root to the respective blade bearing with its front surface contacting a bearing surface by means of fixating means forming a bearing-blade-connection, wherein at each bearing-blade-connection at least one detection device is provided, wherein the at least one detection device is connected to the rotor blade and the blade bearing is provided. The method comprises the steps:
- using the at least one detection device to detect a gap between the bearing surface and the front surface, wherein a gap is detected when a linear distance between the front surface and the bearing surface exceeds a threshold value,
- evaluating a stop condition based on the detection of a gap, wherein the condition is fulfilled when a gap is detected by at least one detection device, and
- when the wind turbine is in operation and the stop condition is fulfilled, stopping the operation of the wind turbine.

This method may be employed with a wind turbine having any of the configurations described herein. The above outlined advantages may also be achieved by the method according to the invention.

In the first step of the method, the at least one detection device is used to detect a gap between the bearing surface and the front surface, wherein a gap is detected depending on the distance between the front surface and the bearing surface. To prevent detection of a wrong, in particular inclined, distance, the distance mentioned above is preferred to be detected perpendicular to the front surface and the bearing surface. Once the threshold value is reached and/or exceeded, a gap is detected. Preferably, as a threshold value a gap size of more than 3.0 mm is used. The threshold value may alternatively be within a range of 1 mm to 5 mm depending on the wind turbine, more specific, the bearing-blade-connection.

In the second step of the method, the stop condition is evaluated based on the detection of a gap. The condition may be fulfilled when a gap is detected by at least one detection device. As described above, the condition may alternatively be fulfilled only when a gap is detected not once or twice, but continuously during a time period, for example ten minutes.

In the third step of the method, the operation of the wind turbine is stopped when the stop condition is fulfilled. In a preferred embodiment, the stop condition is evaluated and the wind turbine is stopped by means of a controller of the wind turbine. The controller may already be part of the wind turbine and may additionally be configured to process and/or evaluate detection results of the at least one detection device. The controller may have any of the configurations described above regarding the wind turbine.

Preferably, at least one measuring device is used as the at least one detection device, wherein the at least one measuring device is used to measure the distance between the bearing surface and the front surface, wherein the stop condition is evaluated based on the measured distances of each measuring device, wherein the stop condition is fulfilled when at least one measured distance exceeds the threshold value. The advantages and possible configurations of such measuring device have already been described above regarding the wind turbine. Measuring, instead of detecting, has the advantage that a built up of blade root damage can be monitored more precisely since an increase of the gap size, in particular the measured distance, can be identified. Based on the recognition of such increase, more precise predictions about the blade root damage can be made. For example, the blade root damage can be classified as:
- no damage, when the gap size, in particular the measured distance, is within a range of 0 to 0.5 mm,
- medium damage, when the gap size is within a range of 0.5 to 1.5 mm,
- high damage, when the measured gap size is within a range of 1.5 to 3.0 mm, and
- critical damage, when the gap size exceeds 3.0 mm.

The stop condition may be fulfilled when at least one of the measured distances reaches and/or exceeds the threshold value of 3.0 mm. In case of the wind turbine operating, the wind turbine may then be stopped to prevent wind turbine damage. The operation of the wind turbine may be stopped by means of the controller and/or an action of a person who received notification about the reached or exceeded threshold value by means of the controller sending the information to a controlling system and/or a controlling software of the wind turbine.

The method described above can be performed while the wind turbine is operating. However, the method may alternatively be performed during downtime of the wind turbine. Hence, as the at least one detection device a detection device may be used which is either permanently connected to the rotor blade and the blade bearing or which is attachable to and removable from the rotor blade and the blade bearing. In the latter case, the at least one detection device may be attached to the rotor blade and the blade bearing before inspection of the gap size between the front surface and the bearing surface. It may be detached again after the inspection.

For inspection of the gap size, and hence the blade root damage, during downtime of the wind turbine, detachable measuring devices, such as gauges, in particular digital gauges, may be used. It is preferred that the attachment and detachment of those measuring devices can be carried out easily without a need of special tools and without damaging the wind turbine, in particular the rotor blade and the blade bearing. Hence, the blade root damage can be inspected even, when there are no suitable detection devices provided or providable at the wind turbine and/or when there is no possibility to process and/or evaluate detection results, for example by means of the controller mentioned above, in the wind turbine.

As described above, a measuring device, in particular a sensor, configured to detect and/or measure the linear distance between the front surface and the bearing surface may be used for monitoring the gap size during operation of the wind turbine. Such measuring device can be permanently attached to either the rotor blade or the blade bearing of a bearing-blade-connection.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a schematic drawing illustrating an embodiment of a wind turbine according to the invention,
- Fig. 2: a schematic drawing illustrating a section view of a bearing-blade-connection of the wind turbine shown in fig. 1,
- Fig. 3: a schematic drawing illustrating the bearing-blade-connection of fig. 1 and 2 with detection devices,
- Fig. 4: a schematic drawing illustrating a bearing-blade-connection with a detection device connected to an outside surface of a blade root,
- Fig. 5: a sketch of a circumference of a blade root with detection devices in positions relevant for the inspection of blade root damage, and
- Fig. 6: a schematic illustration of a method for operating a wind turbine.

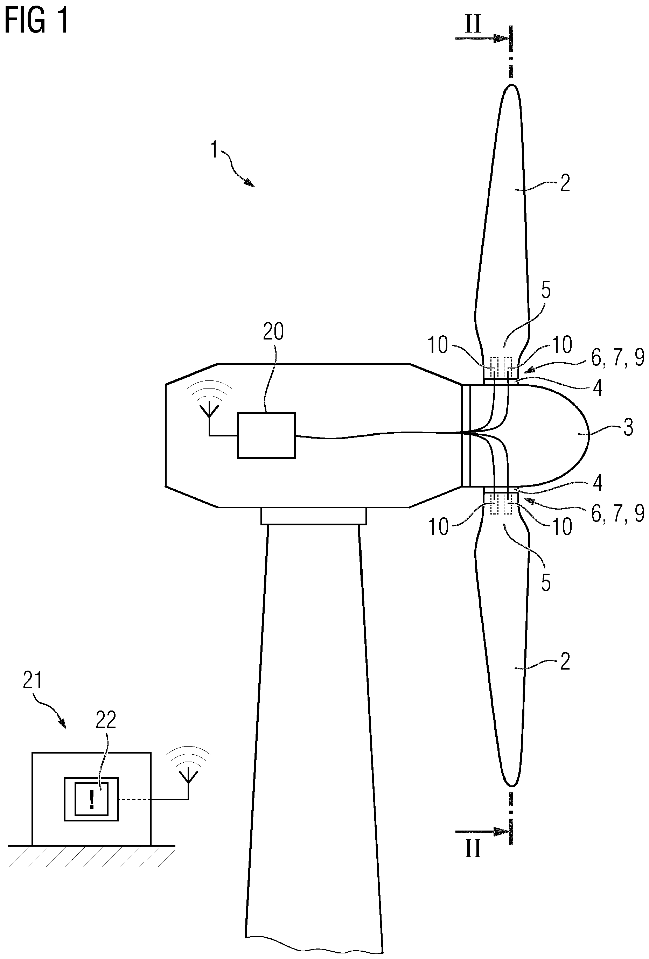

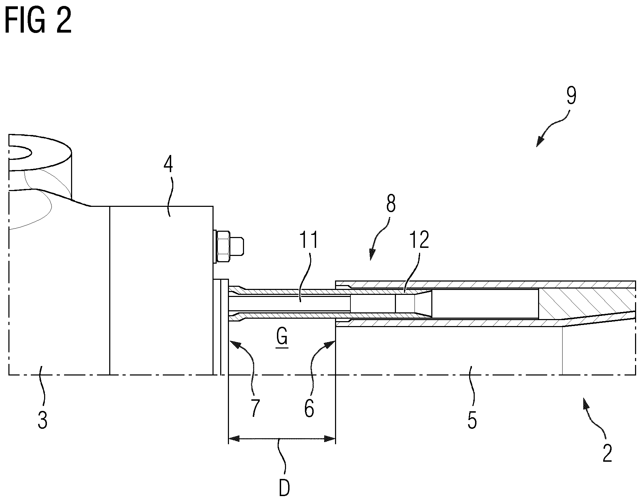

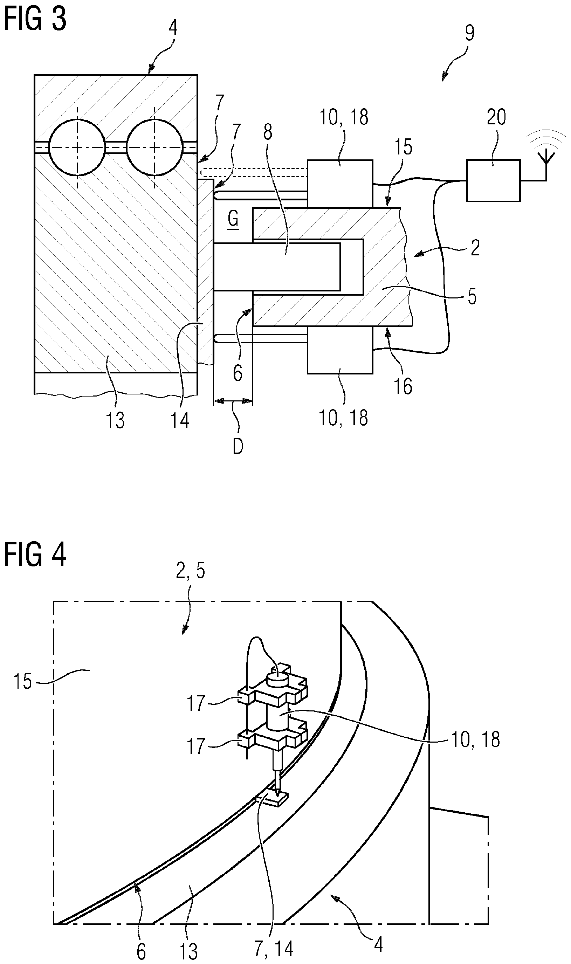

Fig. 1 schematically shows an example of a wind turbine 1 with three rotor blades 2 and a hub 3 comprising three blade bearings 4, one for each rotor blade 2. Each rotor blade 2 is fixed with a blade root 5 to the respective blade bearing 4 with a front surface 6 contacting a bearing surface 7 by means of fixating means 8 forming a bearing-blade-connection 9. The surfaces 6, 7 are visible in fig. 2 and 3. Fig. 1 illustrates two detection devices 10 (dashed lines) provided at each bearing-blade-connection 9, wherein the detection devices 10 are configured to detect a gap G between the front surface 6 and the bearing surface 7 of the respective blade bearing 4 and blade root 5 (see fig. 2 and 3).

For clarification, it is again noted that the "front surface" 6 of the rotor blade 2 respectively the blade root 5 can commonly be referred to as "blade root face" 6.

Fig. 2 illustrates a section view of one of the bearing-blade-connections 9 of the wind turbine 1 of fig. 1. The fixating means 8 comprise bolts 11 fixed to the blade bearing 4 and inserts 12 fixed to a laminate structure of the blade root 5. They may alternatively be provided in in form of T-bolt connections. During operation of the wind turbine 1, blade root damage evolves, causing a linear distance D, and hence a gap G, between the front surface 6 and the bearing surface 7 to increases (It should be noted, that the size of the gap G is strongly exaggerated in fig. 2 and 3). Therefore, the front surface 6 of the blade root 5 is no longer in contact with the bearing surface 7 of the respective blade bearing 4 and the bearing-blade-connection 9 becomes loose. This may result in wind turbine damage.

To prevent risk of structural failure caused by blade root damage, the detection devices 10 are used. Fig. 3 shows the bearing-blade-connection 9 of fig. 2, wherein two possible configurations of the detection devices 10 are illustrated: The bearing surface 7 can either be provided by an inner race 13, also known as "inner ring", of the blade bearing 4 or by a stiffener plate 14 arranged at the inner race 13 of the blade bearing 4. The detection devices 10 are configured to detect the distance D, and hence the size of the gap G, between the respective front surface 6 and the respective bearing surface 7. To do so, they are either connected to the rotor blade 2 and the bearing surface 7 provided by the stiffener plate 14 or to the rotor blade 2 and the bearing surface 7 provided by the inner race 13 of the blade bearing 4 (dashed lines). The linear distance D is detected perpendicular to both, the front surface 6 and the bearing surface 7.

In the example, two detection devices 10 are provided, each of which being connected to the rotor blade 2, more specific the blade root 5, and the blade bearing 4. Exemplarily, one of the detection devices 10 is connected to an outside surface 15 of the rotor blade 2, wherein the other of the two detection devices 10 is connected to an inside surface 16 of the rotor blade 2. Preferably, the detection devices 10 are either provided at the outside surface 15 or at the inside surface 16. Both detection devices 10 are connected to the rotor blade 2 by means of fixating means (not shown), such as bolts and inserts, or adhesive. In an alternative, which is shown in fig. 4, the detection devices 10 can be connected to the outside surface 15 of the rotor blade 2 by means of support devices 17. The detection devices 10 are fixedly connected to the rotor blade 2 and only touch the bearing surface 7 with a detection tip. When the bearing surface 7 detaches from the front surface 6 or vice versa, the needle of each detection device 10 is pushed to the bearing surface 7 to stay in contact to detect the linear distance D.

Once the distance D exceeds a threshold value of 3.0 mm, the gap G is detected by means of the detection devices 10. However, in the example, the detection devices 10 are measuring devices 18, in particular linear variable displacement transducers, configured to measure the size of the gap G, in particular the linear distance D. It is noted, that detection devices 10 and/or measuring devices 18 may be used. Both types of devices 10, 18 can detect the gap G, wherein the use of measuring devices 18 enables a more precise monitoring of the size of the gap G. They are not only able to detect the gap G once the distance D exceeds the threshold value, but to continuously measure the distance D during operation of the wind turbine 1. Hence, increase and decrease of the size of the gap G can be monitored precisely over time. Based the data collected over time, better predictions can be made, for example when a critical level of blade root damage, respectively the threshold value of the distance D, will be reached. In an alternative, the detection devices 10 may be configured to periodically detect (or measure, since they are measuring devices 18) the size of the gap G, thus once or several times in a time period.

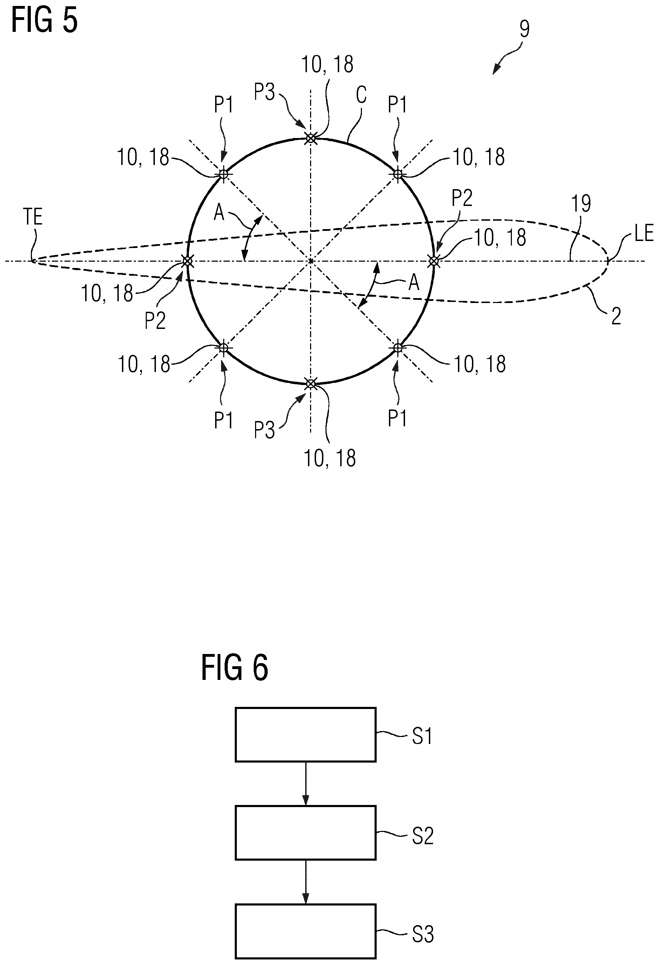

At each bearing-blade-connection 9 several detection devices 10 can be used. The idea is to provide detection devices 10 at positions P1 - P3 along the circumference C of the blade root 5 which will most likely develop the highest local blade root damage during operation of the wind turbine 1 (see fig. 5). Hence, the size of the gap G is monitored at the most critical positions P1 - P3, wherein all remaining positions along the circumference C of the blade root 5 can be expected to show less or no blade root damage and therefore do not need to be inspected. It is noted that detection devices 10 may be provided at other critical positions at the blade root 5, for instance positions which can become critical due to production or transportation of the rotor blade 2. Hence, the critical positions P1 - P3 referred to in the following description are only exemplary positions, wherein additional critical positions may be added.

As illustrated in fig. 5, eight detection devices 10 are equally distributed along the circumference C of the blade root 5. The number of detection devices 10 provided at the bearing-blade-connection 9 is even and respective two detection devices 10 are arranged at opposite positions along the circumference C. However, the number of detection devices 10 can vary.

According to fig. 5, respective two detection devices 10 are provided at the most critical positions P1 - P3 along the circumference C of the blade root 5:
- Positions P1 with an angle A of 45 ° with respect to a cord line 19 of the rotor blade 2 (dashed line),
- Positions P2 which are parallel or at least substantially parallel to the cord line 19, and
- Positions P3 which are perpendicular or at least substantially perpendicular to the cord line 19.

The cord line 19 connects a leading edge LE and a trailing edge TE of the rotor blade 2. In other embodiments, the angle A may vary within a range of 30 ° to 60 °.

The wind turbine 1 further comprises a controller 20, shown in fig. 1 and 3, which is configured to control the operation of the wind turbine 1 depending on a detection result of the detection devices 10 (or measuring data, in case of the detection devices 10 being measuring devices 18). In case of the wind turbine 1 operating and one of the detection devices 10 detecting a distance D, which exceeds the threshold value of 3.0 mm, the operation of the wind turbine 1 is stopped. Alternatively, the operation of the wind turbine 1 may only be stopped when the detected distance D continuously exceeds the threshold or exceeds the threshold value several times in a time period, like three times in ten minutes. Hence, damage of the wind turbine 1 caused by blade root damage can be prevented. The controller 20 is further configured to send information, like detection results or measuring data, to an off-site controlling system 21 of the wind turbine 1 and provide a notification in a controlling software 22 of the wind turbine 1, when the threshold value is exceeded (see fig. 1).

The above-described way to monitor the size of the gap G can be performed during operation of the wind turbine 1. Therefore, the detection devices 10 are permanently installed at the blade root 5 of the rotor blade 2 touching the bearing surface 7. They may, however, be provided at the respective bearing-blade-connection 9 in an attachable and detachable manner. This allows for temporary attachment of detection devices 10 (or measuring devices 18) for inspection of the blade root 5, in particular the damage of the blade root 5, during downtime of the wind turbine 1. Such detection devices 10 can be attached to the rotor blade 2, preferably the outside surface 15 of the rotor blade 2, before the inspection and detached again after the inspection. Hence, the operation of the wind turbine 1 is not negatively affected by unnecessary devices being fixed to the rotor blades 2. However, the operation of the wind turbine 1 must be stopped for inspection. In this case, gauges, in particular digital gauges, may be used as measuring devices 18 or detection devices 10.

Fig. 6 shows a schematical flow chart of a method for operating the wind turbine 1 shown in fig. 1. The method can be applied to operate a wind turbine 1 with any of the specifications described above.

In the first step S1 the detection devices 10 are used to detect a gap G (see fig. 2 and 3) between the bearing surface 7 and the front surface 6. As described above, a gap G is detected when the linear distance D between the front surface 6 and the bearing surface 7 exceeds the threshold value of 3.0 mm. In the second step S2 a stop condition is evaluated based on the detection of a gap G. The stop condition is fulfilled, when a gap G is detected by at least one detection device 10. In the last step S3, in case of the wind turbine 1 operating and the stop condition being fulfilled, the operation of the wind turbine 1 will be stopped.

Of course, the method can be performed with detection devices 10 which are measuring devices 18, as described above. In this case, the stop condition is evaluated based on the measuring data, in particular the measured linear distances D between the bearing surface 7 and the front surface 6 of each bearing-blade-connection 9. The stop condition is fulfilled, when at least one measuring devices 18 measures a linear distance D which exceeds the threshold value. The stop condition may alternatively be fulfilled only when the measured distance D exceeds the threshold value several times or continuously during a time period.

To carry out the steps S2 and S3, the wind turbine 1 may comprises a controller 20 with any of the specification described above (see fig. 1 and 3). The method can be performed with detection devices 10 which are either permanently connected to the rotor blade 2 and the blade bearing 4 or which are attachable to and removable from the rotor blade 2 and the blade bearing. Preferably, the attachment and detachment can easily be performed without special tooling and without damaging the wind turbine.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Wind turbine (1) with at least one rotor blade (2) and a hub (3) comprising one blade bearing (4) for each rotor blade (2), wherein each rotor blade (2) comprises a blade root (5) having a front surface (6), wherein the rotor blade (2) is fixed with the blade root (5) to the respective blade bearing (4) with its front surface (6) contacting a bearing surface (7) by means of fixating means (8) forming a bearing-blade-connection (9), **characterized in that** at each bearing-blade-connection (9) at least one detection device (10) is provided, wherein the at least one detection device (10) is connected to the rotor blade (2) and the blade bearing (4) and is configured to detect a gap (G) between the front surface (6) and the bearing surface (7).

2. Wind turbine (1) according to claim 1, **characterized in that** the at least one detection device (10) is configured to detect a linear distance (D) between the respective front surface (6) and the respective bearing surface (7).

3. Wind turbine (1) according to claim 1 or 2, **characterized in that** the at least one detection device (10) is a measuring device (18) configured to measure the gap size, in particular the linear distance (D), between the front surface (6) and the bearing surface (7).

4. Wind turbine (1) according to claim 3, **characterized in that** the at least one measuring device (18) is a linear displacement sensor, in particular a linear variable displacement transducer.

5. Wind turbine (1) according to claim 3 or 4, **characterized in that** the at least one measuring device (18) is configured to measure the gap size continuously or periodically.

6. Wind turbine (1) according to claim 3, **characterized in that** the at least one measuring device (18) is a gauge, in particular a digital gauge.

7. Wind turbine according to one of the previous claims, **characterized in that** the at least one detection device is connected to either an inside surface or an outside surface of the rotor blade.

8. Wind turbine (1) according to one of the previous claims, **characterized in that** the bearing surface (7) is provided by a stiffener plate (14) arranged at an inner race (13) of the blade bearing (4) or by the inner race (13) of the blade bearing.

9. Wind turbine (1) according to one of the previous claims, **characterized in that** two or more detection devices (10) are equally distributed along the circumference (C) of the blade root (5).

10. Wind turbine (1) according to claim 9, **characterized in that** the number of the detection devices (10) is even, wherein respective two detection devices (10) are arranged at opposite positions.

11. Wind turbine (1) according to one of the previous claims, **characterized in that** the wind turbine (1) comprises a controller (20) configured to control the operation of the wind turbine (1) depending on a detection result of the at least one detection device (10).

12. A method for operating a wind turbine (1) with at least one rotor blade (2) and a hub (3) comprising one blade bearing (4) for each rotor blade (2), wherein each rotor blade (2) comprises a blade root (5) having a front surface (6), wherein the rotor blade (2) is fixed with the blade root (5) to the respective blade bearing (4) with its front surface (6) contacting a bearing surface (7) by means of fixating means (8) forming a bearing-blade-connection (9), wherein at each bearing-blade-connection (9) at least one detection device (10) is provided, wherein the at least one detection device (10) is connected to the rotor blade (2) and the blade bearing (4), wherein the method comprises the steps:
- using the at least one detection device (10) to detect a gap (G) between the bearing surface (7) and the front surface (6), wherein a gap (G) is detected when a linear distance (D) between the front surface (6) and the bearing surface (7) exceeds a threshold value,
- evaluating a stop condition based on the detection of a gap (G), wherein the condition is fulfilled when a gap (G) is detected by at least one detection device (10), and
- when the wind turbine (1) is in operation and the stop condition is fulfilled, stopping the operation of the wind turbine (1).

13. Method according to claim 12, wherein at least one measuring device (18) is used as the at least one detection device (10), wherein the at least one measuring device (18) is used to measure the distance (D) between the bearing surface (7) and the front surface (6), wherein the stop condition is evaluated based on the measured distances of each measuring device (18), wherein the stop condition is fulfilled when at least one measured distance exceeds a threshold value, wherein preferably as a threshold value a gap size of more than 3.0 mm is used.

14. Method according to claim 12 or 13, wherein as the at least one detection device (10) a detection device is used which is eighter permanently connected to the rotor blade (2) and the blade bearing (4) or which is attachable to and removable from the rotor blade (2) and the blade bearing (4).

15. Method according to claim 12 to 14, wherein the stop condition is evaluated and the wind turbine (1) is stopped by means of a controller (20) of the wind turbine (1).
